Europäisches Patentamt

European Patent Office

Office européen des brevets

(11) Numéro de publication: **0 404 653**

**A1**

(12) **DEMANDE DE BREVET EUROPEEN**

(21) Numéro de dépôt: **90401701.9**

(22) Date de dépôt: **18.06.90**

(51) Int. Cl.⁵: **G06F 13/38**

(30) Priorité: **20.06.89 FR 8908203**

(43) Date de publication de la demande:
**27.12.90 Bulletin 90/52**

(84) Etats contractants désignés:
**DE GB**

(71) Demandeur: **COMMISSARIAT A L'ENERGIE ATOMIQUE Etablissement de Caractère Scientifique Technique et Industriel 31/33, rue de la Fédération F-75015 Paris(FR)**

(72) Inventeur: **Leyris, Jacques 7 avenue Gounod F-77330 Ozoir La Ferriere(FR)**
Inventeur: **Jaillard, Denis 57 avenue du Rond-Buisson F-77330 Ozoir La Ferriere(FR)**

(74) Mandataire: **Mongrédien, André et al c/o BREVATOME 25, rue de Ponthieu F-75008 Paris(FR)**

(54) Systeme de couplage avec interface entre au moins deux appareils éléctroniques ayant des bus d'accès de format different.

(57) L'invention concerne un système de couplage avec interface, dans lequel l'interface permet de relier les bus d'accès d'au moins deux appareils électroniques ayant des formats différents, l'un des appareils étant un micro-ordinateur (M0), le ou les autres étant des appareils de mesure (AM), et dans lequel l'interface comporte :
- des premiers moyens (3) d'adaptation de niveaux électriques des lignes d'entrée-sortie d'un premier bus bidirectionnel (1),
- des deuxièmes moyens (12) d'adaptation de niveaux électriques des lignes d'entrée-sortie d'un deuxième bus bidirectionnel (2),
- des premiers moyens (4) de gestion des lignes d'entrée-sortie constituant le premier bus,
- des deuxièmes moyens (11) de gestion des lignes d'entrée-sortie constituant le deuxième bus,
- un bus interne d'adresse (23), un bus interne de donnée (22) et un bus interne de contrôle (27),
- des moyens de commande et de gestion (5, 6, 7) des bus internes de donnée, d'adresse et de contrôle.
Application au couplage d'un bus IEEE 488 et d'un CP bus.

FIG. 2

## SYSTEME DE COUPLAGE AVEC INTERFACE ENTRE AU MOINS DEUX APPAREILS ELECTRONIQUES AYANT DES BUS D'ACCES DE FORMAT DIFFERENT.

L'invention concerne un système de couplage avec interface entre au moins deux appareils électroniques ayant des bus d'accès de format différent. Elle concerne notamment une interface de couplage permettant des échanges entre un micro-ordinateur et un ou plusieurs appareils de mesure.

Généralement les appareils électroniques possèdent une carte interne qui sert d'interface de couplage entre l'appareil lui-même et l'ordinateur ou le micro-ordinateur auquel il peut être relié. Cette carte interface permet donc d'adapter les échanges entre l'appareil de mesure et un type de liaison donné correspondant au format du bus du micro-ordinateur ou de l'ordinateur auquel il est relié.

Lorsqu'on désire relier les appareils de mesure à un autre ordinateur ou micro-ordinateur, c'est le cas par exemple lorsque de nouveaux micro-ordinateurs plus puissants et moins chers apparaissent sur le marché, le format du bus du micro-ordinateur peut ne plus être le même. La demanderesse a rencontré ce problème lorsqu'elle est passée de l'utilisation d'ordinateurs Multi 20 à l'utilisation d'ordinateurs du type IBM PC.

La solution la plus simple, mais la plus onéreuse, consiste lorsque l'on rencontre ce problème à changer à la fois les appareils de mesure et les ordinateurs de manière à avoir des appareils ayant des liaisons de format identique. Cette solution peut être justifiée si les appareils de mesure eux-mêmes sont dépassés. Dans le cas contraire, la solution adoptée consiste à changer la carte interface qui est à l'intérieur des appareils de mesure par une nouvelle carte conçue pour réaliser l'interface entre chaque appareil de mesure et le micro-ordinateur choisi.

La première solution ne pouvait pas résoudre le problème de la demanderesse puisque celle-ci avait décidé de conserver les appareils de mesure qu'elle possédait.

Or, la demanderesse a vu un inconvénient majeur à la deuxième solution connue qui consiste à retirer l'interface placée à l'intérieur des appareils pour la remplacer par une autre car il n'est pas aisé de modifier du matériel existant sans que cela ne pose des problèmes de maintenance.

La demanderesse qui a donc été confrontée à ce problème a cherché dans une autre voie et a trouvé une solution plus souple puisqu'elle n'introduit aucune modification dans les appareils de mesure, cette solution consiste à concevoir une autre carte interface pour permettre des échanges entre chaque appareil de mesure et le micro-ordinateur et plus particulièrement entre la carte interface logée dans l'appareil de mesure et le micro-ordinateur.

Le système de couplage avec interface selon l'invention permet de résoudre le problème du couplage entre deux appareils électroniques ayant des bus d'accès de format différent.

La présente invention a donc pour objet un système de couplage avec interface, caractérisé en ce que l'interface permet de relier les bus d'accès d'au moins deux appareils électroniques ayant des formats différents, l'un des appareils étant un micro-ordinateur, le ou les autres étant des appareils de mesure, ladite interface comportant :
- des premiers moyens d'adaptation de niveaux électriques des lignes d'entrée-sortie d'un premier bus bidirectionnel,
- des deuxièmes moyens d'adaptation de niveaux électriques des lignes d'entrée-sortie d'un deuxième bus bidirectionnel,
- des moyens de gestion des lignes d'entrée-sortie constituant le premier bus,
- des deuxièmes moyens de gestion des lignes d'entrée-sortie constituant le deuxième bus,
- un bus interne d'adresse, un bus interne de donnée et un bus interne de contrôle,
- des moyens de commande et de gestion des bus internes de donnée, d'adresse et de contrôle.

Selon une deuxième caractéristique de l'invention, le premier bus bidirectionnel est un bus au format IEEE 488 et le deuxième bus bidirectionnel est un CP bus.

Selon une autre caractéristique de l'invention, l'interface permet de relier des appareils de mesure du type TKXR7912 à un micro-ordinateur.

Selon une autre caractéristique de l'invention, les moyens de commande et de gestion comportent :
- un microprocesseur relié aux bus internes d'adresse, de donnée et de contrôle,
- une mémoire à accès aléatoire susceptible de contenir des messages à transmettre du micro-ordinateur vers le (ou les) appareil(s) de mesure et inversement, cette mémoire étant reliée aux bus d'adresse, de donnée et de contrôle,
- une mémoire morte reprogrammable contenant un programme permettant d'établir le transfert des informations entre le micro-ordinateur et l'un des appareils de mesure, cette mémoire étant reliée aux bus d'adresse, de donnée et de contrôle.

De façon avantageuse le circuit de base de temps est constitué d'un circuit du type Z80 CTC.

Selon un autre aspect de l'invention, l'interface comporte en outre un circuit logique de remise à zéro et de chien de garde relié au microprocesseur et aux premiers moyens de gestion de lignes.

Avantageusement, le circuit logique de chien de garde est constitué par un circuit du type réseau à logique programmable et le circuit logique de remise à zéro est constitué par un circuit du type 74HC423.

Selon un autre aspect de l'invention, l'interface comporte, dans le cas où le micro-ordinateur est raccordé à plusieurs appareils de mesure, un circuit d'adressage de l'interface permettant d'adresser l'interface désirée.

Selon un autre aspect de l'invention, les premiers moyens de gestion des lignes d'entrée-sortie sont réalisés par un micro-contrôleur de gestion de bus IEEE 488.

Selon un autre aspect de l'invention, les deuxièmes moyens de gestion des lignes d'entrée-sortie sont réalisés par un ou plusieurs circuits du type interface d'entrée-sortie du microprocesseur.

Avantageusement, les premiers moyens d'adaptation de niveaux électriques comportent un premier circuit adaptateur (du type 75160) auquel est relié un premier ensemble de fils du premier bus, sur lequel transitent des informations d'adressage ou des données, un deuxième circuit adaptateur (du type 75161) relié à un deuxième ensemble de fils du premier bus de donnée, sur lequel transitent des signaux de contrôle.

Avantageusement, les deuxièmes moyens d'adaptation de signaux électriques comportent un premier circuit adaptateur (du type 74LS245) auquel est relié un premier ensemble de fils du deuxième bus, un deuxième circuit adaptateur (du type 74LS245) auquel est relié un deuxième ensemble de fils dudit bus, un troisième circuit adaptateur auquel est relié un troisième ensemble de fils dudit bus, un quatrième circuit à réseau logique programmable relié à un quatrième ensemble de fils dudit bus.

D'autres caractéristiques et avantages de l'invention apparaîtront mieux à la lecture de la description détaillée qui suit et qui est faite en référence aux dessins annexés dans lesquels :
- la figure 1 représente un schéma général de principe de l'invention,
- la figure 2 représente le schéma général de l'interface conforme à l'invention,
- les figures 3a et 3b représentent le schéma détaillé de réalisation de l'interface selon l'invention,
- la figure 4 représente le schéma des ensembles J1, 3 et 4,
- la figure 5 représente le schéma des ensembles 5, 6 et 7,
- la figure 6 représente le schéma de l'ensemble 13 et de l'ensemble 9,
- la figure 7 représente le schéma des ensembles 8 et 10,

- la figure 8A représente le schéma des ensembles 11(A), 12(A),
- la figure 8B représente le schéma des ensembles 11(B), 12(B),
- la figure 9 représente le schéma de l'ensemble J2.

Sur l'ensemble des figures l'indication NC signifie borne non connectée.

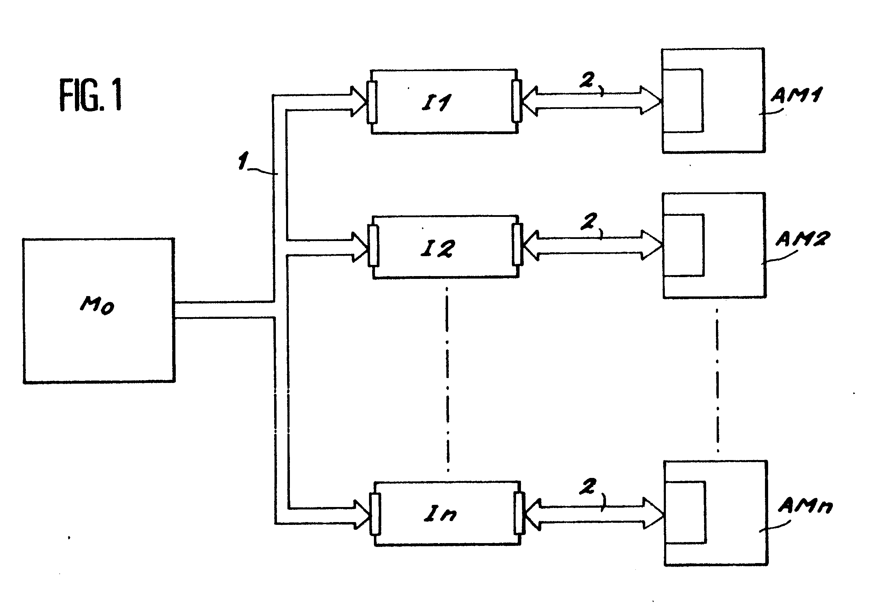

La figure 1 représente le schéma général de principe de l'invention. Le système conforme à l'invention permet d'effectuer un couplage entre un micro-ordinateur (ou un ordinateur), portant la référence M0 sur ce schéma, et un ou plusieurs appareils de mesure référencés AM1, AM2, ... AMn.

Conformément à l'invention, le couplage se fait au moyen d'interfaces, ces interfaces étant placées entre le bus d'accès 1 du micro-ordinateur M0 et le bus d'accès des appareils de mesure AMn.

De façon plus précise, une interface I1 permet de réaliser le couplage entre le micro-ordinateur M0 et l'appareil AM1, une interface I2 permet d'effectuer le même couplage entre le micro-ordinateur et l'appareil AM2... L'interface In permet de réaliser l'interface entre le micro-ordinateur M0 et l'appareil AMn. Ces interfaces I1... In sont identiques.

Ainsi, le premier bus bidirectionnel 1 permet de relier le micro-ordinateur à chaque interface et chaque interface est reliée à un appareil de mesure par le bus bidirectionnel portant la référence 2.

Les échanges entre le micro-ordinateur et chacun des appareils de mesure se fait donc au moyen des bus 1 et 2 par l'intermédiaire de l'interface correspondante. Le micro-ordinateur peut s'adresser à l'un quelconque des appareils de mesure par l'intermédiaire de l'interface qui relie ce micro-ordinateur à cet appareil de mesure et inversement.

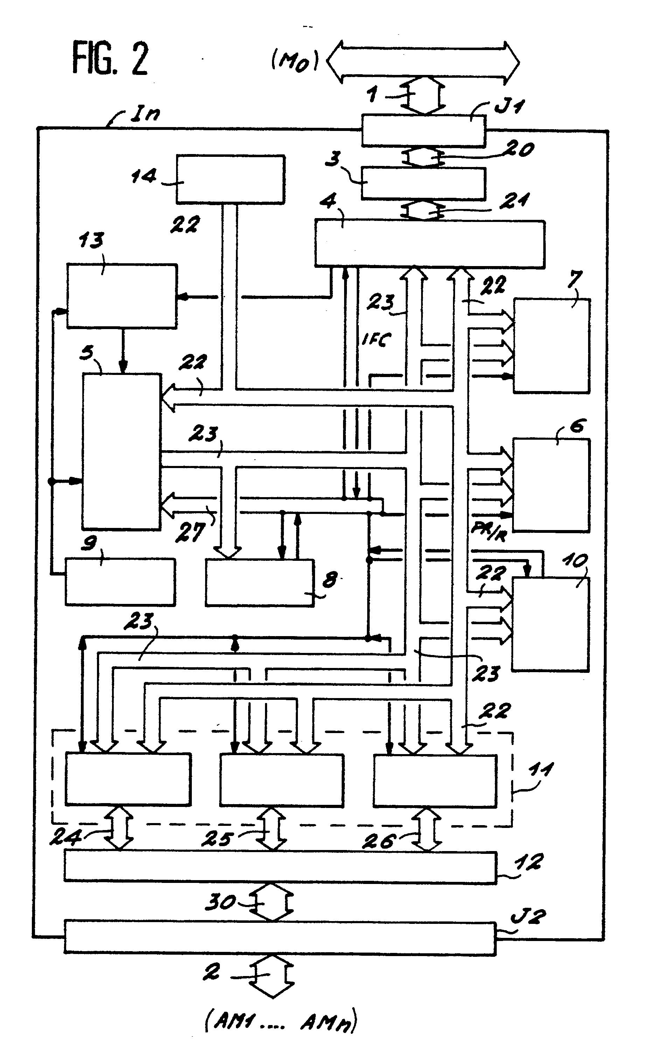

Sur la figure 2, on a représenté le schéma général d'une interface In, cette interface permet de mettre en forme et de transmettre des informations provenant du bus 1 au bus 2, et inversement.

Physiquement, les fils du bus 1 sont reliés à un connecteur J1 et les fils du bus 2 sont reliés à un connecteur J2, ces connecteurs étant disposés sur la carte interface.

L'interface comporte un premier circuit 3 permettant d'effectuer une adaptation du niveau électrique des lignes d'entrée-sortie du bus bidirectionnel 1 relié au connecteur J1.

L'interface comporte également un circuit de gestion 4 des lignes d'entrée-sortie du bus bidirectionnel 1 et plus précisément du bus bidirectionnel 21 d'accès au circuit 3 d'adaptation de niveau électrique.

L'interface comporte également un circuit 12 d'adaptation des niveaux électriques des lignes d'entrée-sortie du bus bidirectionnel 2 et plus précisément du bus d'accès 30 au connecteur.

Les lignes d'entrée-sortie du bus 2 après adaptation des niveaux électriques sont réparties en trois bus bidirectionnels 24, 25, 26, reliés à un circuit de gestion de lignes d'entrée-sortie 11.

L'interface comporte également un bus interne d'adresse 23, un bus interne de donnée 22 et un bus interne de contrôle 27.

L'interface comporte également un microprocesseur 5, une mémoire à accès aléatoire 7 de type RAM, une mémoire de programme 6, programmable et effaçable électriquement (EPROM), une base de temps 10, une horloge 9, un registre de décodage d'adresse 8, un circuit logique de réinitialisation et de chien de garde 13 et également un circuit d'adressage des appareils de mesure 14.

Le bus interne d'adresse 23 est relié au circuit de gestion de lignes d'entrée-sortie 11, au circuit de base de temps 10, à la mémoire de programme 6, à la mémoire 7, au circuit de gestion de lignes d'entrée-sortie 4, au microprocesseur 5 et au circuit de décodage d'adresse 8.

Le bus interne de données 22 est relié aux deux circuits de gestion de lignes d'entrée-sortie 11 et 4, aux deux mémoires 6 et 7, au circuit de base de temps 10, au microprocesseur 5 et au circuit d'adressage des appareils de mesure 14.

Le bus interne de contrôle 27 comporte un ensemble de lignes de commande sur lesquelles sont transmises des informations de façon unidirectionnelle ou bidirectionnelle entre les différents éléments de la carte interface.

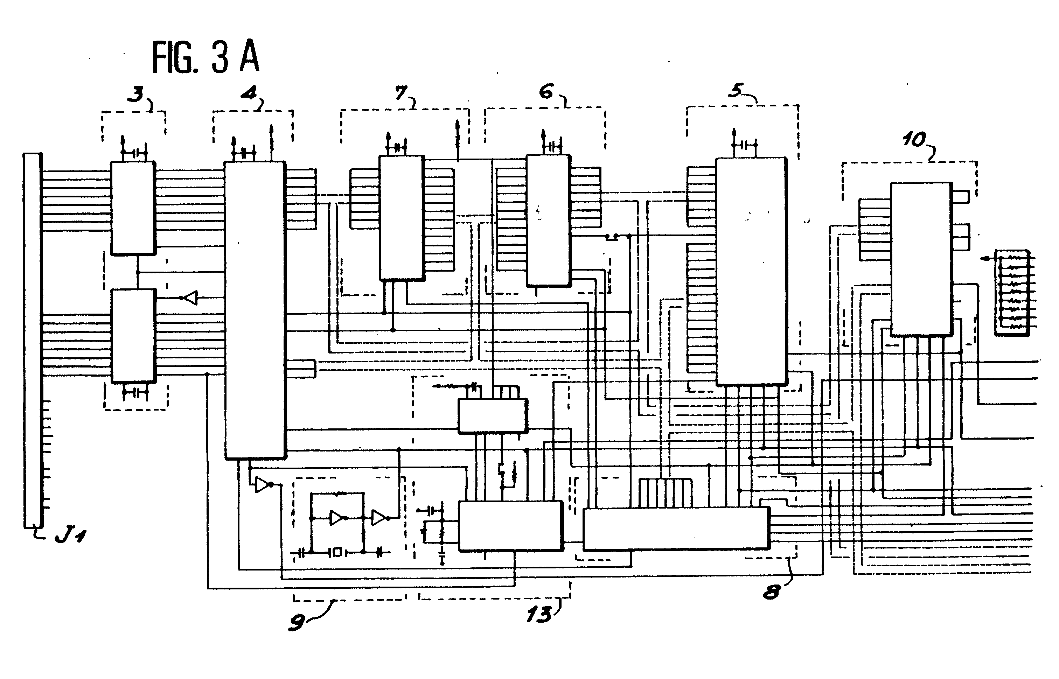

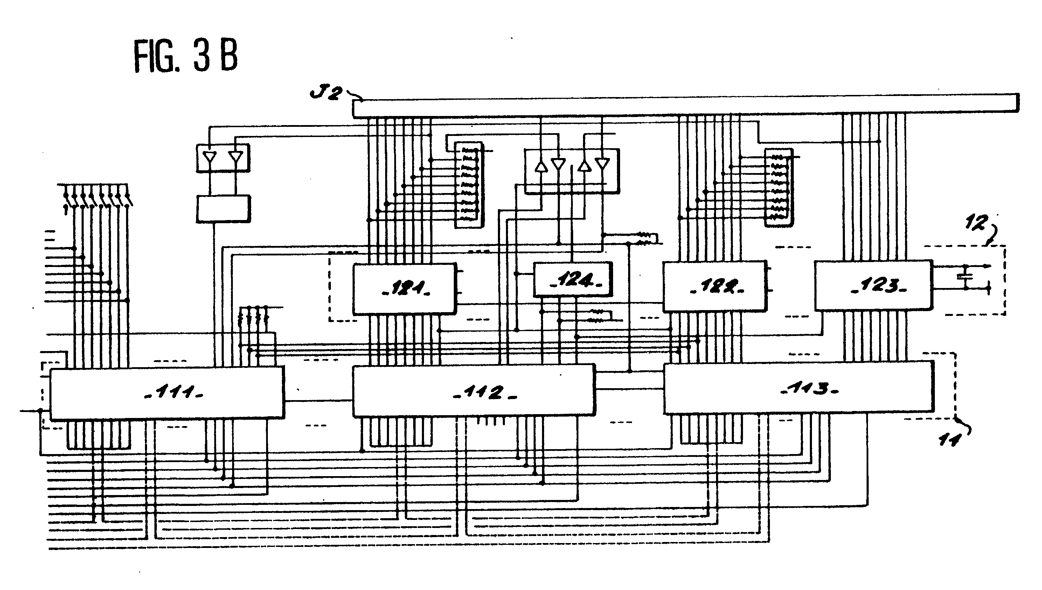

Les figures 3a et 3b permettent d'avoir une vue d'ensemble et à la fois détaillée de la réalisation d'une interface selon l'invention. Tout en gardant un caractère illustratif, ces figures permettent donc à l'homme de métier de mettre en oeuvre l'invention.

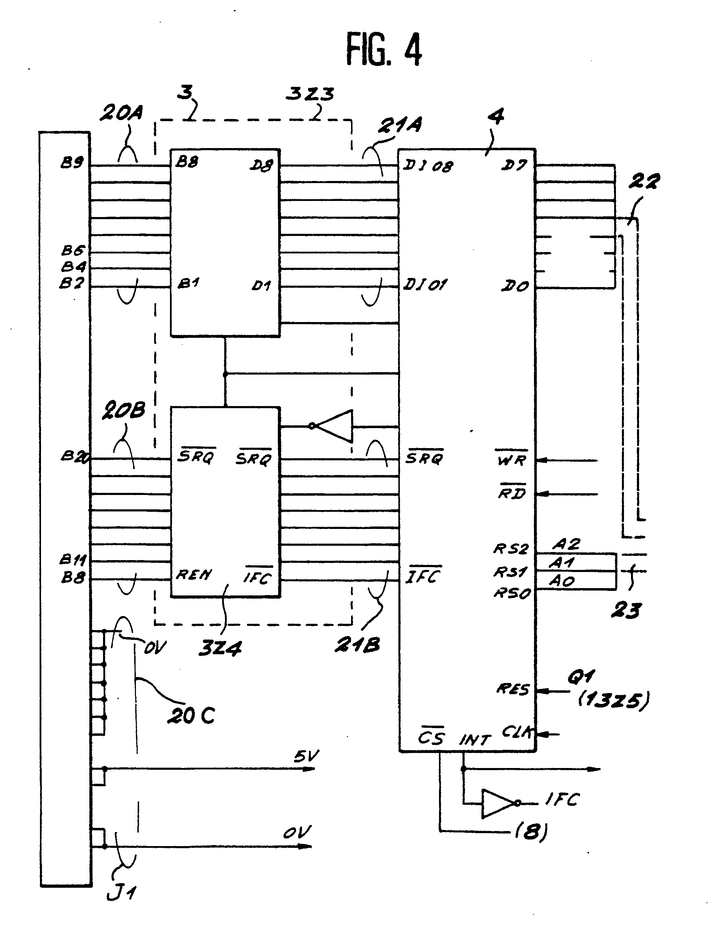

On va maintenant procéder à la description des différents ensembles représentés sur ces figures 3a et 3b et dont le schéma général a été donné à la figure 2. Ces différents ensembles ont été répartis sur les figures 4, 5, 6, 7, 8A, 8B et 9.

La figure 4 représente le schéma des ensembles J1, 3 et 4 de la figure 2.

Les bornes B2 à B32 du connecteur J1 sont reliées au bus 1 bidirectionnel permettant une transmission d'informations entre le micro-ordinateur et chaque carte interface.

Les fils de ce bus référencé 20 à l'intérieur de la carte sont donc reliés à chacune de ces bornes, un premier ensemble de fils constituant un bus 20A est relié aux bornes B2 à B9, un deuxième ensemble de fils 20B est relié aux bornes B10, 11, 12, 14, 16, 18, 20 et 22, et les lignes 20C sont reliées aux bornes B13, 15, 17, 19, 21, 23, 24, 31, 32. Les fils du bus 20C sont, soit reliés à la masse mécanique soit à la masse électrique, à la masse logique (au + 5V).

L'ensemble 3 est préférentiellement constitué de deux circuits référencés respectivement par 3Z3 et 3Z4 qui sont des circuits d'adaptation des niveaux électriques (par exemple du type SN75 160 A pour l'un, et SN75 161 A pour l'autre).

Le premier bus qui est constitué de 24 lignes a été réparti en trois bus 20A, 20B et 20C, correspondant respectivement à des lignes de donnée ou d'adresse (bus 20A) à des lignes de contrôle (bus 20B) et à des lignes de masse ou d'alimentation électrique (bus 20C).

Les niveaux électriques du bus 20A sont adaptés par le circuit 3Z3 et les niveaux électriques du bus 20B sont adaptés par le circuit 3Z4. Les bus de sortie de ces deux circuits sont référencés 21A et 21B.

Le bus 21A est donc constitué de 8 lignes connectées aux bornes de sortie B1 à B8 du circuit 3Z3.

Le bus 21B est constitué de 8 lignes reliées aux bornes des sorties de synchronisation des échanges et de contrôle du circuit 3Z4. Les lignes de synchronisation des échanges et les lignes de contrôle correspondent à celles d'un bus IEEE 488 classique, ces lignes sont des lignes permettant des échanges bidirectionnels.

Le séquencement des informations se fait par la ligne DAV qui signale qu'une donnée est disponible.

La ligne NDAC signale que le récepteur n'a pas pris en compte la donnée ou bien que le récepteur a pris en compte cette donnée.

La ligne NRFD permet de signaler que l'un des appareils, soit le micro-ordinateur, soit l'appareil de mesure n'est pas prêt pour recevoir une donnée.

Parmi les lignes de contrôle, on trouve la ligne ATN qui indique que l'information présente sur le bus, c'est-à-dire l'information que l'on va retrouver sur les bus 20A et 21A, est soit une donnée fonctionnelle, soit une adresse. Cette ligne est controlée généralement par le contrôleur de bus décrit ultérieurement.

La ligne IFC permet d'initialiser l'interface, le signal transmis par cette ligne étant généralement généré par le contrôleur de bus, dans le cas présent MO.

La ligne REN permet de signaler la prise de commande à distance par le contrôleur de bus. Le calculateur MO ne peut dialoguer avec l'interface que lorsqu'il a envoyé un signal d'état requis sur cette ligne.

La ligne EOI permet de remplir deux fonctions : une fonction de fin d'émission, une fonction d'identification. L'état transmis par la ligne est positionné par l'émetteur pour signaler physiquement la fin d'un message, le fonctionnement de cette ligne peut être programmé afin de choisir ou non de la mettre en fonction. Le deuxième rôle est le rôle d'identification qui permet en positionnant l'état requis sur cette ligne de reconnaître le demandeur de l'interruption.

La ligne SRQ permet de transmettre la demande d'interruption.

Les autres lignes contituant le bus 20C sont affectées à des blindages, masse logique, masse mécanique, blindage de lignes de synchronisation des échanges.

Dans la réalisation particulière qui a été faite, l'ensemble des cartes interfaces est placé dans un rack et un seul connecteur permet de connecter le bus normalisé IEEE, c'est-à-dire le bus 1 sur ce rack, le connecteur J1 constitue donc une partie du connecteur servant à relier le micro-ordinateur M0 aux cartes interfaces I1.... In.

Sur la figure 4, on a également représenté l'ensemble 4 qui réalise la fonction de contrôleur de gestion des lignes. Selon la réalisation particulière qui est décrite, ce contrôleur de gestion est réalisé par un micro-processeur du type MUPD72 10.

Il s'agit d'un circuit à 40 pattes de chez NEC, bien entendu tout autre circuit réalisant la même fonction peut être utilisé, par exemple on peut utiliser des contrôleurs de gestion de ligne de chez INTEL.

Ce contrôleur de gestion permet en fait de libérer le microprocesseur principal désigné par la référence 5, de toutes les tâches de séquencement de filtrage numérique tout en restant transparent pour ce processeur principal. Le circuit 4 ne fera en fait de demande au processeur principal que sur des conditions d'erreur qu'il ne saura pas lui-même résoudre.

Les lignes du bus 21A sont reliées aux bornes DI01 à DI08 du circuit 4. Les lignes du bus 21B sont reliées aux bornes IFC jusqu'à SRQ comme on peut le voir sur la figure 4.

Le circuit délivre donc des informations à ces bornes de sortie D0 à D7 sur un bus parallèle 22 qui correspond à un bus de donnée interne pour l'interface, mais qui peut comme on l'a déjà dit transmettre des informations qui sont soit des adresses, soit des données fonctionnelles. Le circuit utilise également sur ses bornes d'entrée RS0 à RS2 des informations qui sont 3 bits d'adressage A0, A1, A2 issus du microprocesseur 5.

Ce circuit 4 utilise également des ordres d'écriture et de lecture à ses bornes WR et RD. Le circuit 4 comporte aussi une borne de réinitialisation RES et une borne pour le signal d'horloge CLK.

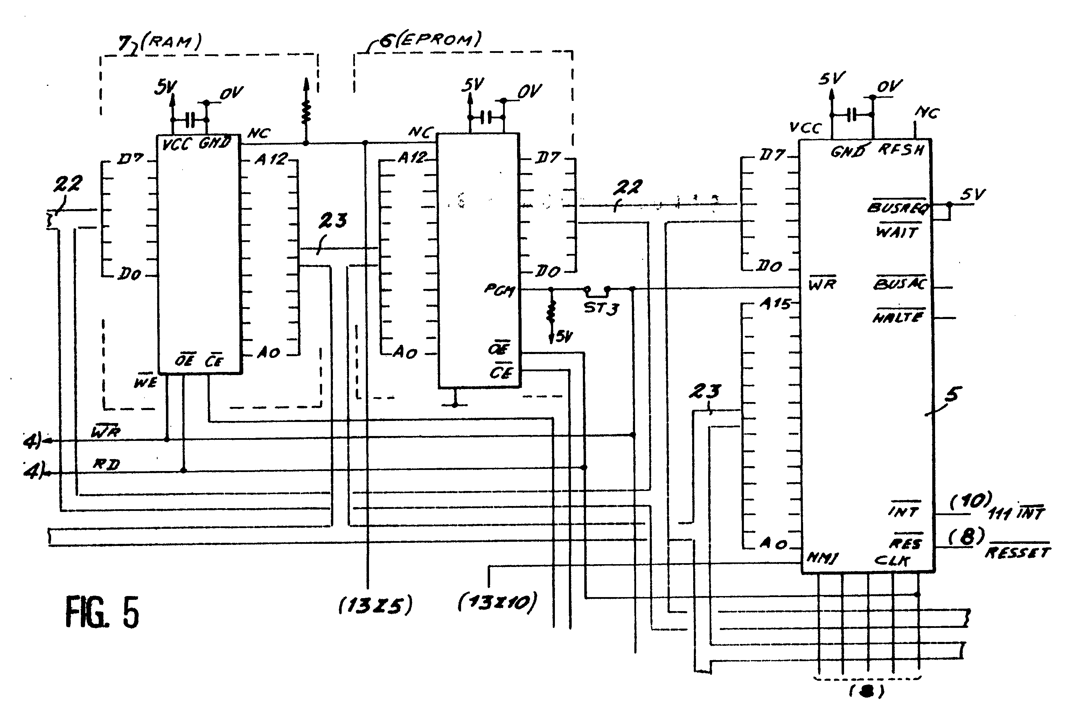

Sur la figure 5, on a représenté les ensembles 5, 6 et 7.

L'interface est bâtie autour du processeur 5, qui est du type Z80 CMOS, cadencé avec une horloge à 4 MHz. Le programme de l'interface est contenu dans la mémoire EPROM de 8 Koctets portant la référence 6, qui est un circuit de type D27C64 ou μP D27C64. Les différents messages et variables sont stockés dans la mémoire RAM portant la référence 7 de 8 Koctets de technologie CMOS du type μ PD43 64.

Le bus internes 22 est relié aux entrées de donnée D0 à D7 du circuit 5, aux entrées de donnée D0 à D7 de la mémoire 7 et aux entrées de donnée D0 à D7 de la mémoire EPROM 6. Le bus interne 23 est relié aux entrées d'adressage A0, A15 du microprocesseur 5 aux entrées d'adressage A0, A12 de la mémoire RAM 7 et aux entrées d'adressage A0, A12 de la mémoire EPROM 6.

La mémoire RAM permet de stocker les messages par un système de pile, elle sert à préparer la structure des messages de contrôle. Cette mémoire contient également les mots d'état.

Sur détection de présence d'un message en réception, le microprocesseur va chercher dans la pile le nombre de caractères relatifs à la trame transmise et va les transférer dans la zone de travail de la mémoire RAM.

Le strap ST3 permet de remplacer la mémoire EPROM 6 par une mémoire RAM compatible pour des besoins de maintenance ou de développement.

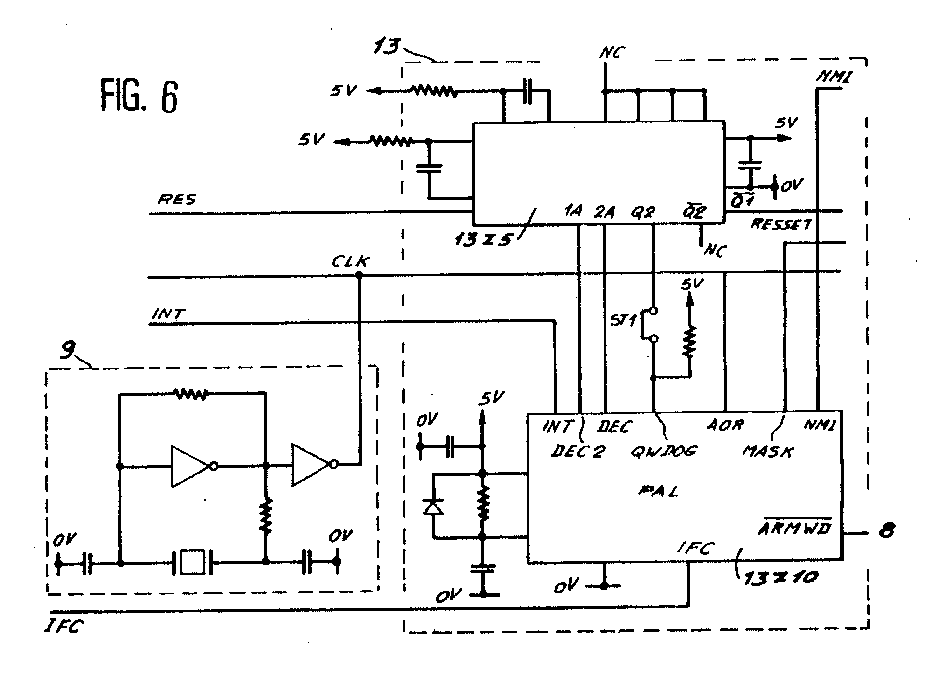

La figure 6 représente les ensembles 13 et 9. L'ensemble 13 constitue un circuit logique de réinitialisation et de chien de garde et l'ensemble 9 réalise la fonction d'horloge du microprocesseur 5 et du contrôleur de gestion de ligne 4. Cette horloge génère un signal de fréquence 4 MHz. L'oscillateur placé dans l'horloge démarre dès la mise sous tension de l'interface.

Le circuit 13Z5 réalise la fonction chien de garde. Il est, dans cet exemple de réalisation constitué, d'un circuit du type 74HC423A. Le chien de garde permet au microprocesseur 5 de tourner dans une application et, dès qu'un défaut d'exécution extérieur intervient, de réinitialiser l'ensemble du système de façon matérielle.

Le chien de garde génère donc le signal de réinitialisation RESET de l'interface et du microprocesseur 5 de cette interface.

Ce circuit 13Z5 est un double monostable, dont une moitié de circuit permet d'élargir les créneaux du signal d'initialisation et l'autre moitié est déclenchée lors de la mise sous tension : elle doit être maintenue sous contrôle du programme de la mémoire 7. En l'absence de maintien, ce qui correspond à un état stable, le circuit génère donc le signal de réinitialisation de l'interface.

On utilise par ailleurs un circuit à logique programmable du type PAL C16L8 pour résoudre les problèmes de réinitialisation à la mise sous tension de l'interface.

Lorsqu'une réinitialisation est nécessaire hors mise sous tension, le calculateur peut envoyer cet ordre par la ligne qui est reliée à la borne IFC du circuit 13Z10.

Cette ligne permet donc d'armer le chien de garde de façon indépendante du microprocesseur 5 au moyen de ce circuit à logique programmable 13Z10.

Le chien de garde 13Z5 est mis en position instable et y est maintenu à la mise sous tension. Le microprocesseur 5 a la possibilité de réarmer ce chien de garde ou de ne pas le réarmer.

La ligne ARMWD permet de réarmer le chien de garde pendant des écritures à une adresse réservée. Lorsque le chien de garde n'est pas réarmé, ses niveaux de sortie retombent et positionnent les entrées du circuit PAL13Z10 de manière à ce que ce circuit envoie un signal d'initialisation à tout le système.

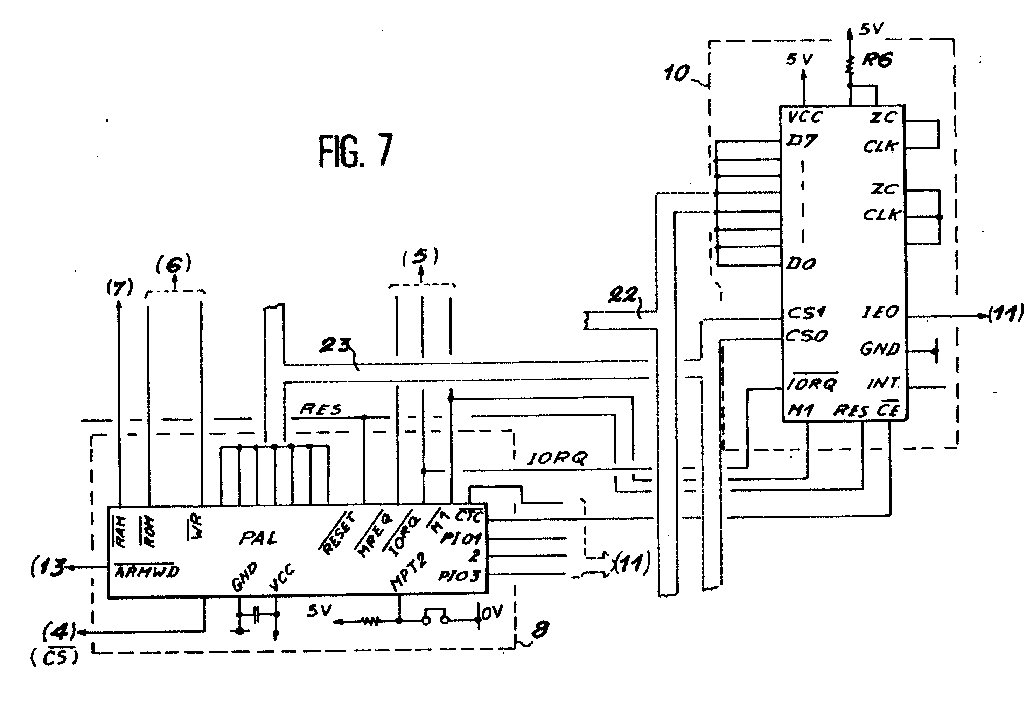

Sur la figure 7, l'on a représenté les ensembles 8 et 10. L'ensemble 8 est un circuit de décodage d'adresses. L'ensemble 10 est le circuit de base de temps.

Le circuit de décodage d'adresse 8 permet de générer les adresses du plan mémoire et des circuits périphériques initialisés à la mise sous tension de l'interface. Ce circuit de décodage d'adresse génère des validations pour les moyens de gestion de lignes d'entrée-sortie formés par l'ensemble 11.

Ce circuit 8 est relié au bus interne d'adresse 23. Il est également relié à la ligne de réinitialisation, au microprocesseur par des lignes de contrôle, aux lignes d'écriture des mémoires 6, 7 et à la ligne d'ordre d'écriture de la mémoire 6. Il génère le signal de réarmement pour le chien de garde.

Le circuit de base de temps 10 est relié d'une part au bus interne 22, d'autre part au bus interne 23. Ce circuit 10 est également relié à certaines bornes de sortie du circuit 8 de décodage d'adresse. Il reçoit le signal de réinitialisation RESET. Il reçoit également le signal d'horloge CLK.

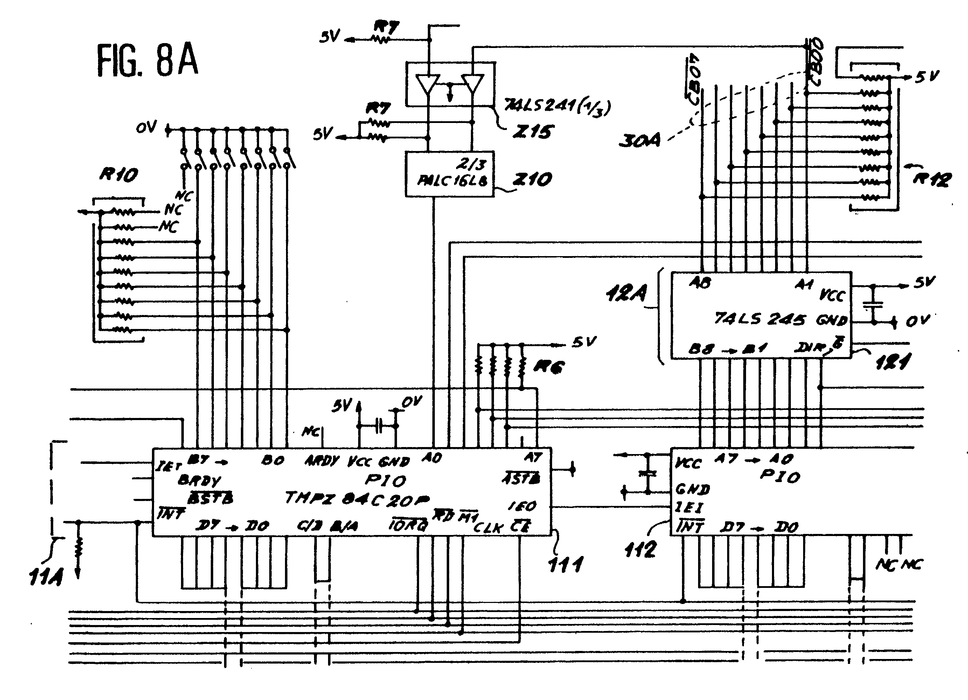

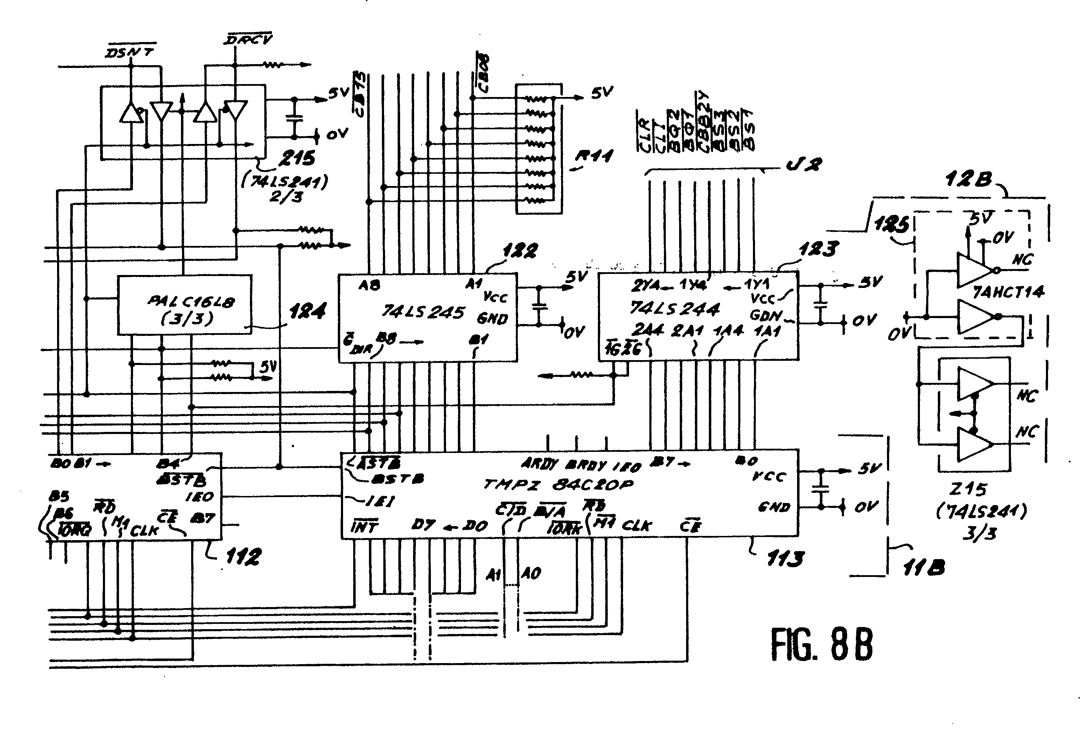

La figure 8A représente le schéma des ensembles 11A et 12A. La figure 8B représente le schéma des ensembles 11B, 12B. Ces deux figures vont être décrites en même temps puisqu'il s'agit des mêmes ensembles, les ensembles 11 et 12 ayant ainsi été divisés pour les besoins de la représentation.

L'ensemble 11 comprend trois circuits périphériques du type TMPZ 84C20P reliés au bus interne d'adresse 23 et au bus interne de donnée 22. Cet ensemble 11 constitue un circuit de gestion des lignes d'entrée-sortie côté appareil de mesure. Les trois périphériques d'entrée-sortie portent les références 111, 112, 113 et peuvent être adressés par le microprocesseur 5 au moyen de deux bits d'adresse sur les entrées d'adresse A0, A1.

Les trois circuits 111, 112, 113 sont également reliés à la ligne d'initialisation, à la ligne de demande d'interruption INT, à la ligne du signal d'horloge CLK, au circuit de décodage d'adresse 8.

Ces circuits d'interface 111, 112, 113 sont également reliés au bus bidirectionnel 2 d'accès aux appareils de mesure, et cela par l'intermédiaire d'un circuit d'adaptation de niveau électrique portant la référence 12.

Ce circuit 12 est constitué de deux circuits adaptateurs du type 74LS245, d'un circuit adaptateur du type 74LS244. Il comporte en outre un circuit à logique programmable PALC16L8 portant la référence 124.

De façon avantageuse, les circuits à logique programmable qui sont utilisés dans l'interface forment en fait chacun une partie d'un même circuit.

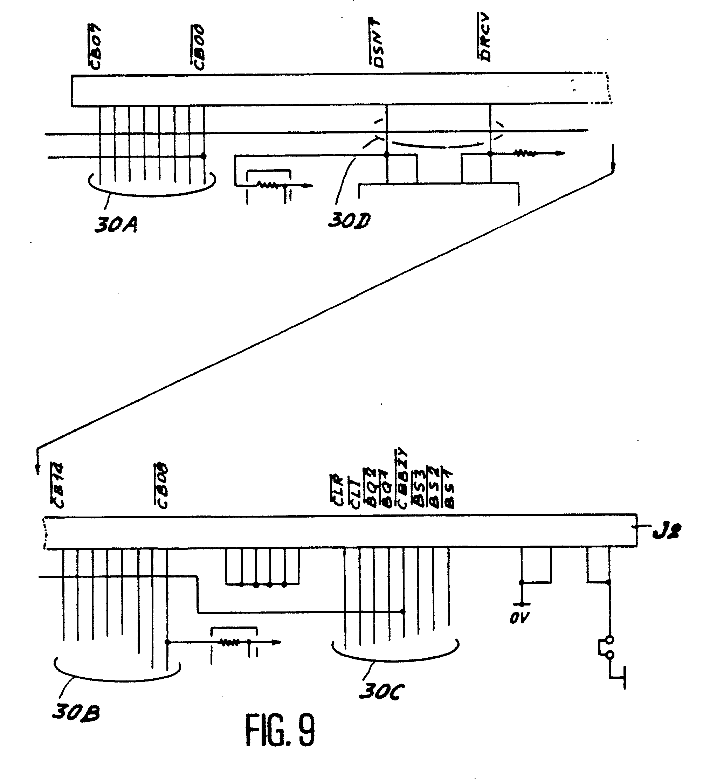

La figure 9 représente le schéma de l'ensemble J2. c'est-à-dire de la partie du connecteur qui permet la liaison entre le bus bidirectionnel 2 et l'interface.

Ce bus bidirectionnel 2 est un bus parallèle sur 16 bits. Le bus comporte 16 lignes de données bidirectionnelles de type collecteur ouvert qui sont donc reliées à un réseau de résitance R11 et R12. Ces 16 lignes portent les références 30A et 30B.

Les lignes du bus 30A sont reliées aux entrées d'adresse du circuit d'adaptation de niveau électrique portant la référence 121. Les huit autres lignes de données constituent le bus bidirectionnel 30B relié aux entrées d'adresse du circuit 122.

Ce bus 2 comporte en outre une ligne DSNT qui indique que le module émetteur a positionné une donnée sur le bus (donnée envoyée). L'interface se trouvant réceptrice positionne alors une ligne DRCV (donnée reçue) et vice-versa.

Le bus 30C comporte 8 lignes de contrôle du bus, une ligne de bus occupée CBBZY qui est positionnée par le contrôleur de bus 11, et plus exactement par le circuit 111 via les circuits Z10 et Z15.

Le bus 30C comporte en outre une ligne CLI indiquant à l'interface qu'une demande d'interruption est prise en compte.

Le codage de l'appareil de mesure relié à l'interface est fait à partir de trois lignes BS1, BS2, BS3 et deux lignes BQ1, BQ2 sont réservées à la description du sens de transfert des informations.

Les autres lignes sont soit reliées à une masse mécanique, soit à une masse électrique, soit au blindage.

Comme cela a déjà été dit, les circuits adaptateurs de niveau électrique sont des circuits à logique trois états, positionnés à l'état haute impédance à l'initialisation de l'appareil de mesure et de l'interface. Ces circuits sont des circuits TTL.

Le circuit 74LS245 est un driver de bus bidirectionnel pour le bus de donnée, le circuit 74LS244 est un driver unidirectionnel pour les signaux de contrôle.

On a utilisé de façon préférentielle trois PIO du type Z80, c'est-à-dire trois circuits interface d'entrée-sortie du microprocesseur 5, portant les références respectives 111, 112, 113, pour gérer l'ensemble des lignes du bus 2. On n'utilise sur ces circuits que 5 des 6 ports disponibles, un port étant réservé au codage de l'adresse de l'interface.

Le port B du PIO 113 n'est programmé qu'en sortie pour gérer les lignes de contrôle.

Le PIO 112 gère les lignes de synchronisation DSNT et DRCV à l'émission au moyen du circuit driver Z15 (du type 74LS241) qui est rendu bidirectionnel par un jeu de connexions externes au boîtier. Par défaut, ce circuit driver Z15 est toujours positionné en entrée à l'écoute de ce qui vient de l'appareil de mesure.

Le port B de ce circuit PIO 112 permet également de gérer la mise en haute impédance par les ports B2 à B4 des circuits d'adaptation d'un niveau électrique Z15, 123, 121 et 122. Il permet aussi de valider le bus du circuit 123 par son port B4. Il valide les circuits 121 et 122 en émission de donnée ou réception.

Le port B du PIO 111 est programmé en lecture. Ses lignes sont reliées à un réseau de résistances R10 et permettent le codage de l'adresse de l'interface.

Le port A du PIO 111 comporte deux lignes (A1, A2) pour la lecture des informations qui arrivent et une ligne reliée au circuit Z10.

Ce circuit Z10 permet de détecter la demande d'une interruption provenant d'un appareil de mesure. Le circuit driver Z15, qui fait partie d'un même boîtier, est relié à ce circuit Z11 et est à un état haute impédance à la mise sous tension, ce qui inhibe la fonction d'interruption pendant l'initialisation de l'interface par forçage des états à un niveau inactif au moyen des résistances R7.

Un circuit logique 124 permet de choisir le sens de fonctionnement des lectures/écritures des circuits 121, 122, 123. Il permet en effet d'effectuer une commande de direction.

## Revendications

1. Système de couplage avec interface, caractérisé en ce que l'interface permet de relier les bus d'accès de formats différents d'au moins deux appareils électroniques pour des échanges bidirectionnels d'informations, l'un des appareils étant un micro-ordinateur (M0), le ou les autres étant des appareils de mesure (AM) du type oscilloscope possédant déjà une interface interne ayant un bus d'accès donné, ladite interface comportant :
- des premiers moyens (3) d'adaptation de niveaux électriques des lignes d'entrée-sortie d'un premier bus bidirectionnel (1), qui réalise les échanges entre le micro-ordinateur et l'interface selon un format donné,
- des deuxièmes moyens (12) d'adaptation de niveaux électriques des lignes d'entrée-sortie d'un deuxième bus bidirectionnel (2), qui réalise les échanges entre l'interface et l'appareil de mesure via son interface interne, selon le format du bus d'accès de cette interface interne,
- des premiers moyens (4) de gestion des lignes d'entrée-sortie constituant le premier bus,
- des deuxièmes moyens (11) de gestion des lignes d'entrée-sortie constituant le deuxième bus,
- un bus interne d'adresse (23), un bus interne de donnée (22) et un bus interne de contrôle (27),
- des moyens de commande et de gestion (5, 6, 7) des bus internes de donnée, d'adresse et de contrôle.

2. Système de couplage avec interface selon la revendication 1, caractérisé en ce que le premier bus bidirectionnel (1) est un bus au format IEEE 488 et le deuxième bus bidirectionnel (2) est un CP bus.

3. Système de couplage avec interface selon les revendications 1 ou 2, caractérisé en ce que l'interface permet de relier des appareils de mesure du type TKXR7912 à un micro-ordinateur.

4. Système de couplage avec interface selon l'une quelconque des revendications 1 à 3, caractérisé en ce que les moyens de commande et de gestion comportent :
- un microprocesseur (5) relié aux bus internes d'adresse (23), de donnée (22) et de contrôle (27),
- une mémoire (7) à accès aléatoire susceptible de contenir des messages à transmettre du micro-ordinateur vers le (ou les) appareil(s) de mesure et inversement, cette mémoire étant reliée aux bus d'adresse (23), de donnée (22) et de contrôle (27),
- une mémoire morte (6) reprogrammable contenant un programme permettant d'établir le transfert des informations entre le micro-ordinateur et l'un des appareils de mesure, cette mémoire étant reliée aux bus d'adresse (23), de donnée (22) et de contrôle (27).

5. Système de couplage avec interface selon l'une quelconque des revendications 1 à 4, caractérisé en ce l'interface comporte en outre un circuit de base de temps (10) relié aux bus internes d'adresse (23), de donnée (22) et de contrôle (27).

6. Système de couplage avec interface selon l'une quelconque des revendications 1 à 5, caractérisé en ce que l'interface comporte en outre un circuit logique (13) de réinitialisation et de chien de garde relié au microprocesseur (5) et aux premiers moyens (4) de gestion de lignes.

7. Système de couplage avec interface selon la revendication 6, caractérisé en ce que le circuit logique (13) de chien de garde est constitué par un circuit du type réseau à logique programmable (13Z1).

8. Système de couplage avec interface selon l'une quelconque des revendications 1 à 7, caractérisé en ce que l'interface comporte, dans le cas où le micro-ordinateur (M0) st raccordé à plusieurs appareils de mesure (AM), un circuit d'adressage de l'interface permettant d'adresser l'interface désirée.

9. Système de couplage avec interface selon l'une quelconque des revendications 1 à 8, caractérisé en ce que les premiers moyens (4) de gestion des lignes d'entrée-sortie sont réalisés par un micro-contrôleur de gestion de bus IEEE.

10. Système de couplage avec interface selon l'une quelconque des revendications 1 à 9, caractérisé en ce que les deuxièmes moyens de gestion des lignes d'entrée-sortie sont réalisés par un ou plusieurs circuits du type interface d'entrée-sortie du microprocesseur (5).

11. Système de couplage avec interface selon l'une quelconque des revendications 1 à 10, caractérisé en ce que les premiers moyens d'adaptation de niveaux électriques (4) comportent un premier circuit adaptateur (3Z3) auquel est relié un premier ensemble de fils (20A) du premier bus (1), sur lequel transitent des informations d'adressage ou des données, un deuxième circuit adaptateur (3Z4) relié à un deuxième ensemble de fils (20B) du premier bus (1), sur lequel transitent des signaux de contrôle.

12. Système de couplage avec interface selon l'une quelconque des revendications 1 à 11, caractérisé en ce que les deuxièmes moyens d'adaptation de signaux électriques (12) comportent un premier circuit adaptateur (121) auquel est relié un premier ensemble de fils (30A) du deuxième bus (2), un deuxième circuit adaptateur (122) auquel est relié un deuxième ensemble de fils (30B) dudit bus (2), un troisième circuit adaptateur (123) auquel est relié un troisième ensemble de fils (30C) dudit bus (1), un quatrième circuit (124) à réseau logique programmable relié à un quatrième ensemble de fils (30D) dudit bus (1).

FIG. 1

EP 0 404 653 A1

# FIG. 2

FIG. 3 A

FIG. 3 B

EP 0 404 653 A1

# FIG. 4

FIG. 5

EP 0 404 653 A1

FIG. 6

EP 0 404 653 A1

# FIG. 7

EP 0 404 653 A1

# FIG. 8A

EP 0 404 653 A1

FIG. 8B

EP 0 404 653 A1

FIG. 9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | IEEE TRANSACTIONS ON INDUSTRIAL ELECTRONICS AND CONTROL vol. 26, no. 3, août 1979, NEW YORK US pages 151 - 155; C.J. Tavora: "The remote link unit - an advanced remote terminal concept" * le document en entier * | 1, 8-12 | G06F13/38 |
| A | | 2-7 | |
| Y | EP-A-273136 (HONEYWELL BULL) * page 3, ligne 35 * * page 5, ligne 10 - page 7, ligne 17 * * abrégé; revendications ; figures 3, 4A * | 1-2, 4-12 | |
| A | | 3 | |
| Y | ASILOMAR CONFERENCE ON CIRCUITS SYSTEM AND COMPUTERS 7 novembre 1977, Pacific Grove, California, US; pages 477 - 480; T. Nishimukai et al.: "Universal IO device controller by using programmable logic arrays (PLA)" * le document en entier * | 2, 6-7 | |
| A | | 1, 4-5, 8-9, 11 | DOMAINES TECHNIQUES RECHERCHES (Int. Cl.5 )<br><br>G06F |
| Y | WO-A-8401447 (BURROUGHS CORP.) * pages 35 - 57, ligne 33 * * abrégé; figures 1-2 * | 1, 4-5, 8-12 | |
| A | | 2-3, 6-7 | |
| A | PATENT ABSTRACTS OF JAPAN vol. 9, no. 69 (E-305)(1792) 29 mars 1985, & JP-A-59 205857 (YASUSHI SUZUKI) 21 novembre 1984, * le document en entier * | 1, 8-12 | |
| A | EP-A-68992 (THE BENDIX CORP.) * page 1, ligne 32 - page 3, ligne 30 * * figure 2 * | 1-4, 6-12 | |

Le présent rapport a été établi pour toutes les revendications

| Lieu de la recherche | Date d'achèvement de la recherche | Examinateur |
|---|---|---|
| LA HAYE | 02 OCTOBRE 1990 | SOLER J.M.B. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................
& : membre de la même famille, document correspondant

EPO FORM 1503 03.82 (P0402)